# FASCICULE DE BREVET EUROPEEN

(11) **EP 2 040 971 B1**
(45) Date de publication et mention de la délivrance du brevet: **15.09.2010**
(21) Numéro de dépôt: 07803984.9
(22) Date de dépôt: 06.07.2007
(51) Int. Cl.: B62D 25/20, B60J 5/04

(54) **DISPOSITIF DE RENFORT DE BAS DE PORTE**
VORRICHTUNG ZUR VERSTÄRKUNG DER UNTERKANTE EINER TÜR
DEVICE FOR REINFORCING THE LOWER EDGE OF A DOOR

(30) Priorité: 18.07.2006 FR 0653003
(43) Date de publication de la demande: 01.04.2009
(73) Titulaire: Renault SAS, 92100 Boulogne Billancourt (FR)
(72) Inventeur: KERGUELEN, Yannick, 91410 Dourdan (FR)
(86) Numéro de dépôt international: PCT/FR2007/051605
(87) Numéro de publication internationale: WO 2008/009836

(56) Documents cités:
- EP-A- 1 275 539
- US-A- 5 752 737
- US-A1- 2003 189 357

## Description

La présente invention concerne un dispositif de bas de porte permettant de limiter l'intrusion de la porte à l'intérieur de l'habitacle lors d'un choc latéral.

La protection des occupants d'un véhicule est l'une des préoccupations techniques majeures lors d'un choc latéral et fait l'objet de nombreux développements. Pour cela on contrôle la déformation de la porte directement en contact avec l'occupant lors du choc, afin de limiter son intrusion dans l'habitacle du véhicule concerné. L'intrusion de la porte dans l'habitacle est fonction de plusieurs paramètres dont la rigidité propre de la porte, sa tenue latérale assurée par la serrure, les gâches, les charnières, les pieds avant et milieu du véhicule ainsi que les recouvrements de la porte sur le longeron.

Pour les portes de grande taille ou pour garantir une protection des occupants accrue, il s'avère souvent nécessaire de modifier la fabrication des systèmes d'ouvrants et la porte qui leur est associée en ajoutant des moyens de retenue ou d'ancrage de la porte pour limiter son intrusion dans l'habitacle.

L'art antérieur divulgue des solutions comprenant des moyens de retenue de formes diverses qui sont rapportés à la porte ou à l'habitacle dans le but de retenir la porte lors de son enfoncement. Par exemple, le brevet français FR 2834491 divulgue un moyen de retenue comprenant au moins un pointeau fixé au longeron du bas de caisse et un trou pratiqué dans la doublure de porte en regard du pointeau lorsque la porte est en position fermée.
Sans remettre en cause l'efficacité de ce moyen de retenue, celui-ci présente l'inconvénient de faire porter les efforts lors d'un choc latéral sur des régions localisées du bas de caisse et de la porte, nécessitant de prévoir dans ces régions des caractéristiques de grande résistance et de rigidité. De plus les pointeaux sont rapportés à la caisse, ce qui nécessite de prévoir une étape de fixation de ces pointeaux à la caisse au moment du montage.
Un autre inconvénient de ces moyens de retenue par pointeau est de présenter une face pointue saillante sur la face extérieure du bas de caisse, il peut en résulter des risques de blessure ou de dégradation des vêtements de l'occupant lors de ses entrées et sorties du véhicule.
Le brevet américain US5752737 divulgue un renforcement, de pied milieu, en cas de choc latéraux par complémentarité de forme. Ce document couvre les caractéristiques du préambule de la revendication 1 de la demande.
Le but de l'invention est alors d'éliminer tout ou partie des inconvénients des moyens de retenue précités et de proposer des moyens de retenue de porte de véhicule automobile lors d'un choc latéral subi par celui-ci qui soient efficaces, réduisant le nombre de pièces qu'il faut rapporter à l'un ou l'autre parmi le bas de caisse ou la doublure de porte et d'éviter les risques de blessure pour l'occupant.

Pour cela, l'invention a pour objet un bas de caisse de véhicule automobile apte à coopérer avec un élément de bas de porte, et comprenant au moins un longeron qui présente une face latérale orientée vers l'extérieur du véhicule remarquable en ce qu'il est formé dans cette face du longeron, un renfoncement de forme complémentaire de l'élément de bas de porte apte à retenir l'enfoncement du bas de porte lors d'un choc latéral.

Selon d'autres caractéristiques du bas de caisse selon l'invention, le renfoncement comporte au moins une première face et une seconde face orientée de manière à faire glisser des faces correspondantes du bas de porte sous le longeron.

Selon d'autres caractéristiques du bas de caisse selon l'invention, le renfoncement comporte de plus un épaulement qui en coopération avec la seconde face du longeron est apte à limiter la rotation du bas de porte autour du longeron.

L'invention a aussi pour objet le bas de porte correspondant, celui-ci étant apte à coopérer avec un bas de caisse selon l'invention comprenant au moins un élément de renfort de bas porte remarquable en ce qu'au moins une face du renfort de bas de porte présente une forme apte à coopérer avec un bas de caisse en vue de la retenue de l'enfoncement du bas de porte.

Selon une autre caractéristique de l'invention ce bas de porte comprend un corps creux dans le voisinage de la barre apte à s'intercaler entre la barre et le longeron afin de se tasser lors d'un enfoncement de la porte. Ceci permet de répartir les appuis du renfort de bas de porte sur le longeron de bas de caisse. Ceci permet aussi de masquer la barre de renfort présente dans le bas de porte. En outre, on augmente la retenue de la porte lors d'un enfoncement de celle-ci suite à un choc latéral.

L'invention concerne également un dispositif de fermeture d'une ouverture latérale de véhicule automobile comprenant au moins l'un parmi un bas de porte ou un bas de caisse selon l'invention en vue de la retenue de l'enfoncement du bas de porte à l'intérieur de l'habitacle.

L'invention concerne aussi le véhicule automobile mettant en oeuvre au moins l'un parmi un bas de porte, un bas de caisse ou un dispositif de fermeture selon l'invention.

D'autres caractéristiques et avantages de l'invention apparaîtront à l'examen de la description détaillée d'un mode de réalisation de l'invention, nullement limitatif, et des dessins annexés, sur lesquels :
- la figure 1 est une vue en coupe transversale d'une porte de véhicule automobile et du caisson de bas de caisse correspondant selon l'invention;
- la figure 2 est une vue en coupe transversale d'une porte de véhicule automobile et du caisson de bas de caisse selon l'invention après un enfoncement dû à un choc latéral sur la porte.

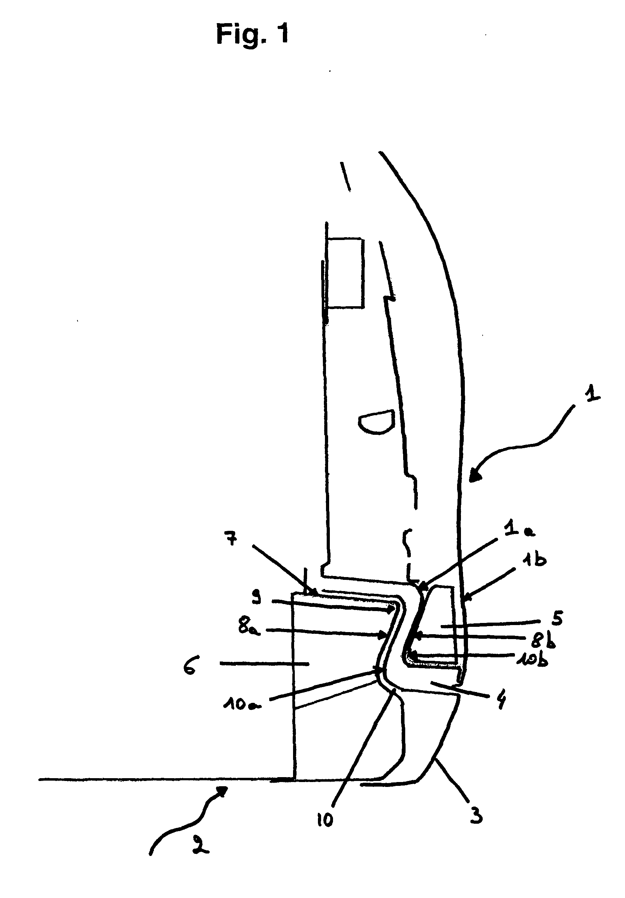

Sur la figure 1, sont représentés un bas de porte 1 de véhicule automobile et un bas de caisse 2 associé à ce dernier selon un mode de réalisation de l'invention.

Le bas de caisse 2 comprend un longeron 6 ainsi qu'une garniture 3 qui recouvre le bas de caisse 2 et en particulier au moins une partie du longeron 6. Cette garniture 3 peut être utilisée pour masquer le longeron 6 et d'autre parties mécaniques du bas de caisse 2 non représentées sur les figures. Cette garniture 3 peut aussi apporter une protection du bas de caisse 2 contre la corrosion.

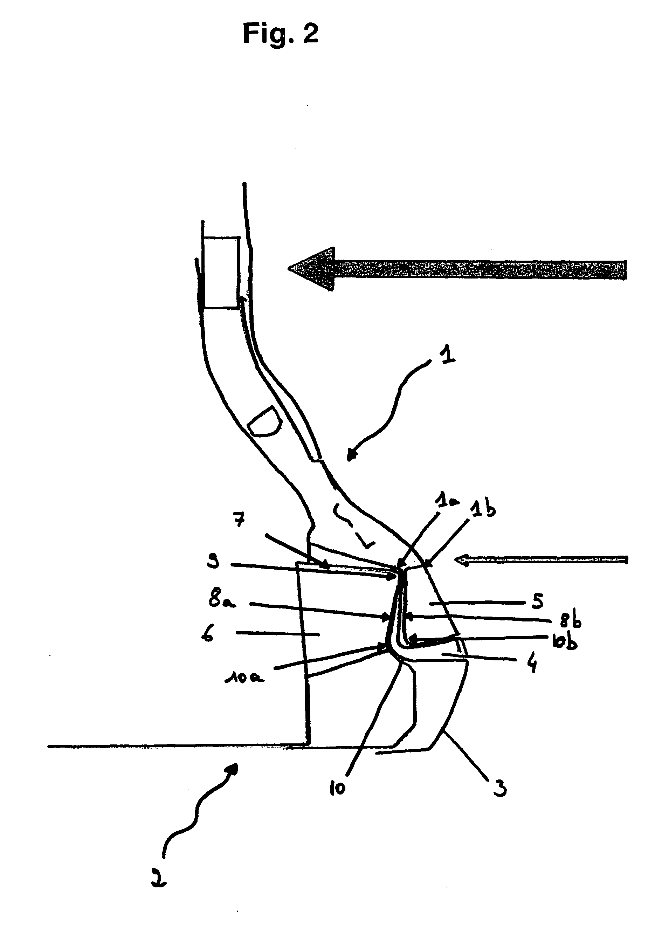

Le bas de porte 1 comprend au moins un élément de renfort de bas de porte 5. Cet élément de renfort 5 peut être fixé à la paroi externe 1b du bas de porte, c'est à dire dirigée vers l'extérieur du véhicule ou bien fixé à la paroi interne 1a du bas de porte 1, c'est-à-dire dirigée vers l'intérieur du véhicule. Cet élément de renfort 5 peut aussi être fixé à la fois à la paroi interne 1a et à la paroi externe 1b du bas de porte 1. Dans l'exemple de réalisation représenté sur les figures 1 et 2, l'élément de renfort 5 vient en contact avec la paroi interne 1a du bas de porte 1. De plus, cet élément de renfort 5 peut s'étendre sur toute la longueur ou s'étendre sur au moins une partie du bas de porte 1. En outre, cet élément, de renfort 5 peut être d'un seul tenant ou comporter au moins une pièce constitutive.

Un jeu 4 est disposé entre la paroi interne 1a du bas de porte 1 et le bas de caisse 2. Ce jeu 4 offre une plage de réglage des positions relatives du bas de porte 1 par rapport au bas de caisse 2. On peut aussi placer un corps creux à l'emplacement de ce jeu 4 apte à se tasser lors de l'enfoncement de la porte.

Le longeron 6 du bas de caisse 2 comprend une face supérieure 7 sensiblement horizontale et une face sensiblement verticale 8 orientée vers l'extérieur du véhicule. Dans cette face 8 est formé un renfoncement 10. Le renfoncement 10 présente au moins deux faces inclinées. Une première face 8a se trouve dans la partie supérieure du renfoncement 10 et est orientée de manière à ce qu'une normale à cette surface coupe le plan sur lesquelles les roues du véhicule reposent. Une seconde face 10a se trouve dans la partie inférieure du renfoncement 10 et est orientée de manière à ce qu'une normale à cette surface ne coupe pas le plan sur lesquelles les roues du véhicule reposent et coupe le plan passant par le pavillon de l'habitacle. Le renfoncement 10 peut aussi présenter une zone arrondie entre la première face 8a et la seconde face 10a. Le longeron 6 présente également un épaulement 9 placé à l'intersection des plans passant par la face supérieure 7 et par la face latérale 8 et qui résulte de la formation de l'enfoncement 10. Cet épaulement 9 peut présenter une zone arrondie.

L'élément de renfort 5 présente une forme complémentaire du renfoncement 10. En particulier, l'élément 5 présente une face 8b qui est complémentaire de la première face 8a du renfoncement 10 et une face 10b qui est complémentaire de la seconde face 10a du renfoncement 10.

On obtient ainsi un élément de renfort 5 apte à s'engager au moins partiellement dans l'espace formé par le renfoncement 10.

Dans le cas où l'on considère un choc latéral pour un système comprenant un bas de caisse 2 et un bas de porte 1, le mouvement naturel de ces deux éléments en l'absence de moyens de retenue est le suivant. Le bas de porte 1 est enfoncé en direction du bas de caisse 2 et présente une propension à se soulever par-dessus le longeron 6. La force exercée sur la porte comprend majoritairement une composante sensiblement horizontale. Soumis à cette contrainte, les composantes résultantes sur le bas de porte 1 sont une composante sensiblement horizontale et une composante sensiblement verticale dirigée vers le haut du véhicule en raison d'une contrainte d'arrachement liée à l'étendue et aux caractéristiques de flexion d'un tel bas de porte 1.

Les moyens de retenue présents selon l'invention sur ce bas de caisse 2 et sur ce bas de porte 1 doivent pouvoir s'opposer au mouvement naturel de ces éléments en cas de choc latéral .C'est pourquoi les formes complémentaires du longeron 6 et de l'élément de renfort de bas de porte 5 sont choisies de telle manière, que lors d'un enfoncement de la porte, une des composantes résultantes sur le bas de porte 1 est sensiblement horizontale et l'autre composante résultante sur le bas de porte 1 est sensiblement verticale et dirigée vers le bas. Cette dernière est dirigée vers le bas en raison de la coopération de l'élément de renfort 5 et du longeron 6 tendant à faire passer l'élément de renfort 5 par-dessous le longeron 6, transformant une partie de la contrainte exercée sur la porte en une force de retenue. Dans le mode de réalisation tel que présenté sur les figures 1 et 2, les faces inclinées 8à et 8b parties respectivement du longeron 6 et de l'élément de renfort 5 glissent l'une contre l'autre. La face 8b de l'élément 5 présente un mouvement descendant par rapport à la face 8a du longeron 6 lorsque le mouvement du bas de porte 1 est dirigé au moins partiellement vers l'intérieur de l'habitacle.

Plus généralement, en fonction de la forme choisie pour l'élément de renfort 5 et du renfoncement 10, cette coopération consiste par exemple en la retenue constituée par l'appui de l'élément de renfort de bas de porte 5 sous l'épaulement 9 ou par le glissement de l'élément de renfort 5 à l'intérieur du renfoncement 10 selon une direction tendant à faire passer l'élément de renfort 5 sous le longeron 6. On choisira ainsi des formes permettant à ces effets de se produire. Par exemple, on peut avoir la coopération de faces biseautées l'une inclinée vers le bas et l'autre inclinée vers le haut ou alors celle de parties concaves et convexes appartenant respectivement au longeron 6 et à l'élément de renfort 5.

Le degré d'inclinaison des faces inclinées ou l'importance des concavités ou des convexités respectivement du renfoncement 10 et de l'élément 5 sont déterminées par la force du choc latéral que l'on désire garantir avant l'engouffrement du bas de porte 1 dans l'habitacle.

Outre le glissement respectif des faces l'une par rapport à l'autre comme il est décrit ci avant, un autre effet peut concourir à éviter le passage de l'élément de renfort 5 par-dessus le longeron. Plus particulièrement, les formes du renfoncement 10 et de l'épaulement 9 sont aptes à limiter la rotation de l'élément de renfort 5 autour d'un axe localisé dans la région de l'épaulement 9. La partie inférieure 10a de l'enfoncement 10 en coopérant avec sa face complémentaire 10b sur l'élément de renfort 5 constitue une première butée, et l'épaulement 9 forme une deuxième butée. Ces butées permettent d'empêcher la rotation de l'élément de renfort 5 autour de l'épaulement 9.

Le jeu 4 formé entre le bas de porte 1 et le bas de caisse 2 peut être dimensionné de manière à sélectionner les points d'impact préférentiels et/ou augmenter l'effet de butée.

Un joint ou un élément pouvant se tasser lors de l'enfoncement de la porte peut être placé dans au moins une partie de l'espace constitué par le jeu 4. Ceci permet de répartir les appuis de l'élément de renfort 5 sur le longeron 6 de bas de caisse 2. En choisissant un matériau ou un traitement de surface dont le coefficient de friction est faible sur les faces qui doivent glisser l'une sur l'autre et un coefficient de friction élevé en d'autres points, notamment les points où l'on veut réaliser un appui pour limiter la rotation de l'élément de renfort 5 autour de l'épaulement 9, on obtient une retenue du bas de porte 1 plus importante.

Bien entendu, la présente invention n'est pas limitée au mode de réalisation décrit et représenté.

## Revendications

1. Bas de caisse (2) de véhicule automobile, apte à coopérer avec un élément de bas de porte (1), et comprenant au moins un longeron (6) qui présente une face latérale orientée vers l'extérieur du véhicule et qui présente un renfoncement (10) de forme complémentaire de l'élément de bas de porte (1) apte à retenir l'enfoncement du bas de porte (1) lors d'un choc latéral **caractérisé en ce que** le renfoncement (10) comporte au moins une première face (8a) et une seconde face (10a) orientées de manière à faire glisser des faces correspondantes du bas de porte (1) selon un mouvement descendant par rapport au longeron (6).

2. Bas de caisse (2) selon la revendication précédente **caractérisé en ce que** le renfoncement (10) comporte de plus un épaulement (9) qui en coopération avec la seconde face (10a) du longeron (6) est apte à limiter la rotation du bas de porte (1) autour du longeron (6).

3. Bas de porte (1) de véhicule automobile apte à coopérer avec un bas de caisse (2) selon les revendications précédentes, et comprenant au moins un élément de renfort de bas porte (5) **caractérisé en ce qu'**au moins une face (8b, 10b) du renfort de bas de porte (5) présente une forme apte à coopérer avec un bas de caisse (2) en vue de la retenue de l'enfoncement du bas de porte (1).

4. Bas de porte (1) selon la revendication précédente comprenant un corps creux (4) apte à s'intercaler entre l'élément de renfort (5) et le longeron (6) afin de se tasser lors d'un enfoncement du bas de porte (1).

5. Dispositif de fermeture d'une ouverture latérale de véhicule automobile comprenant l'un parmi un bas de porte (1) selon l'une quelconque des revendication 3 ou 4 ou un bas de caisse (2) selon l'une quelconque des revendications 1 ou 2 en vue de la retenue de l'enfoncement du bas de porte (1) à l'intérieur de l'habitacle.

6. Véhicule automobile comprenant au moins l'un parmi un dispositif de fermeture selon la revendication 5, un bas de caisse selon l'une quelconque des revendications 1 ou 2 ou un bas de porte (1) selon l'une quelconque des revendications 3 ou 4.

## Claims

1. Rocker panel (2) for a motor vehicle, capable of engaging with a door bottom element (1) and comprising at least one longitudinal member (6) which has a side face oriented towards the exterior of the vehicle and which has a depression (10), which fits the shape of the door bottom element (1), to withstand intrusion of the door bottom (1) in a side impact, **characterized in that** the depression (10) comprises, as a minimum, a first face (8a) and a second face (10a), both oriented in such a way as to cause corresponding faces of the door bottom (1) to slide in a descending movement with respect to the longitudinal member (6).

2. Rocker panel (2) according to the preceding claim, **characterized in that** the depression (10) also comprises a shoulder (9) which is able, with the second face (10a) of the longitudinal member (6), to limit the rotation of the door bottom (1) about the longitudinal member (6).

3. Door bottom (1) for a motor vehicle, capable of engaging with a rocker panel (2) according to the preceding claims, and comprising at least one door bottom reinforcing element (5), **characterized in that** at least one face (8b, 10b) of the door bottom depression (5) is of a shape such as to engage with a rocker panel (2) in order to withstand intrusion of the door bottom (1).

4. Door bottom (1) according to the preceding claim, comprising a hollow body (4) able to fit between the reinforcing element (5) and the longitudinal member (6) in order to compress in an intrusion of the door bottom (1).

5. Device for closing a lateral opening of the motor vehicle, comprising either a door bottom (1) according to either of Claims 3 and 4, or a rocker panel (2) according to either of Claims 1 and 2, for withstanding intrusion of the door bottom (1) into the passenger compartment.

6. Motor vehicle comprising at least one of: a closure device according to Claim 5; a rocker panel according to either of Claims 1 and 2; and a door bottom (1) according to either of Claims 3 and 4.

## Patentansprüche

1. Kraftfahrzeugaufbauunterteil (2), das geeignet ist, mit einem Türunterteilelement (1) zusammenzuwirken, und mindestens einen Längsträger (6) umfasst, der eine zur Außenseite des Fahrzeugs gerichtete Seitenfläche und eine Vertiefung (10) aufweist, deren Form zu dem Türunterteilelement (1) komplementär ist und bei einem Seitenaufprall das Einrammen des Türunterteils (1) aufhalten kann, **dadurch gekennzeichnet, dass** die Vertiefung (10) mindestens eine erste Fläche (8a) und eine zweite Fläche (10a) umfasst, die so ausgerichtet sind, dass entsprechende Flächen des Türunterteils (1) gemäß einer bezüglich des Längsträgers (6) hinabgehenden Bewegung auf ihnen gleiten können.

2. Aufbauunterteil (2) nach dem vorhergehenden Anspruch, **dadurch gekennzeichnet, dass** die Vertiefung (10) ferner einen Absatz (9) umfasst, der zusammen mit der zweiten Fläche (10a) des Längsträgers (6) geeignet ist, die Drehung des Türunterteils (1) um den Längsträger (6) zu begrenzen.

3. Kraftfahrzeugtürunterteil (1), das geeignet ist, mit einem Aufbauunterteil (2) nach den vorhergehenden Ansprüchen zusammenzuwirken, und mindestens ein Türunterteilverstärkungselement (5) umfasst, **dadurch gekennzeichnet, dass** mindestens eine Fläche (8b, 10b) der Türunterteilverstärkung (5) eine Form aufweist, die geeignet ist, mit einem Aufbauunterteil (2) zum Aufhalten des Einrammens des Türunterteils (1) zusammenzuwirken.

4. Türunterteil (1) nach dem vorhergehenden Anspruch, mit einem Hohlkörper (4), der zwischen dem Verstärkungselement (5) und dem Längsträger (6) eingefügt werden kann, damit er sich bei einem Einrammen des Türunterteils (1) zusammendrückt.

5. Vorrichtung zum Schließen einer seitlichen Kraftfahrzeugöffnung mit einem Türunterteil (1) nach Anspruch 3 oder 4 oder einem Aufbauunterteil (2) nach Anspruch 1 oder 2 zum Aufhalten des Einrammens des Türunterteils (1) in das Innere des Fahrgastraums.

6. Kraftfahrzeug mit einer Schließvorrichtung nach Anspruch 5 und/oder einem Aufbauunterteil nach Anspruch 1 oder 2 und/oder einem Türunterteil (1) nach Anspruch 3 oder 4.
